Europäisches Patentamt

European Patent Office

Office européen des brevets

(11) Publication number: **0 442 184 A1**

## EUROPEAN PATENT APPLICATION

(21) Application number: 90301647.5

(22) Date of filing: **15.02.90**

(51) Int. Cl.⁵: **C11B 3/12, A23C 15/14**

(43) Date of publication of application:
21.08.91 Bulletin 91/34

(84) Designated Contracting States:
**BE DE FR GB IT**

(71) Applicant: **CAMPBELL SOUP COMPANY**
**Campbell Place**
**Camden New Jersey 08101(US)**

(72) Inventor: **Johnson, Bobby Ray**
**129 Kipling Road,**
**Cherry Hill, NJ 08003,(US)**
Inventor: **Conte, Joseph A. Jr.**
**788 Old White Horse Pike,**
**Waterford, NJ 08089,(US)**

(74) Representative: **Bannerman, David Gardner et al**
**Withers & Rogers 4 Dyer's Buildings Holborn**
**London, EC1N 2JT(GB)**

(54) Production of low cholesterol animal fat by short path distillation.

(57) A method for production of low-cholesterol animal fat. Anhydrous liquid animal fat is subjected to a short path distillation process wherein entrainment-enhancing compositions are used to provide a low-cholesterol animal fat product having composition and organoleptic characteristics substantially similar to those of the natural animal fat.

EP 0 442 184 A1

## BACKGROUND OF THE INVENTION

### 1. Field of the the invention

The subject invention relates to the production of low-cholesterol animal fat by a short path distillation process in combination with use of entrainment enhancing compositions. The invention also relates to low-cholesterol animal fat products produced by this method.

### 2. Description of Related Art

Products derived from animal sources are popular sources of food products intended for human consumption. Food products derived from animal sources include products easily identified as having an animal source, such as eggs and cuts of meat, and other, less-readily identified products, such as ice cream.

However, some consumers have become hesitant about utilizing products containing animal fats. This hesitance is derived in part from the knowledge that all animal fats contain cholesterol. Recently, consumption of excessive quantities of cholesterol has been identified as undesirable and likely to be hazardous to human health.

One category of typically high-cholesterol foods, milk fat-containing foods, is popular with consumers. Consumers prize the distinctive organoleptic properties of milk fat. For example, butter is highly prized for its properties as a condiment. However, milk fat contains cholesterol. The popularity of frozen dessert products which have reduced fat content (lower than that of ice cream), such as tofu, frozen low-fat yogurt, ice milk, and the like, indicate that consumers' preferences are changing away from products wherein animal fats provide a significant portion of the nutritive value. No doubt, this change is due, at least in part, to the negative impact ingested cholesterol has on human health.

The desirability of reducing the cholesterol content of animal fats, including milk fat, has been recognized. However, known methods have proven to be less than satisfactory because the organoleptic properties of the product typically differ significantly from the properties of the natural product. For example, mouth feel, melting point, or color may be significantly altered by the cholesterol removal technique.

A satisfactory cholesterol removal process preferably would maximize removal of cholesterol while minimizing alterations to the properties of the cholesterol-containing product to yield a low-cholesterol product indistinguishable from fresh, natural product. However, known cholesterol-removing processes also make significant changes in products or organoleptic characterstics.

Some known methods for deodorizing and stabilizing oils remove sterols from oil, as noted in U.S. Patent 2,613,215. This patent discloses a method which removes "unsaponifiable materials," together with free fatty acids, from oil. After partial hydrogenation, the unsaporifiable materials are removed by high temperature fractionation with a liquified, normally-gaseous hydrocarbon solvent. This patent also discloses that polar solvents can be utilized to separate unsaponifiable materials, which are soluble in the solvent, from the major portion of the oil, which is substantially immiscible in polar solvent. The thus-treated oil is further "deodorized," essentially as taught in U.S. Patent 2,351,832, i.e., by injecting steam at a temperature above 250° C through the oil at a pressure of less than 20 millimeters of mercury. Deodorization, as taught in this patent, is unsatisfactory for removing cholesterol from animal fat because, under these conditions, very little cholesterol is removed.

Fractionation of fats has been used to obtain separate component portions, typically so that the portions can be selectively recombined to yield a product having pre-selected characteristics. For example, the solvent-assisted fractionation disclosed in U.S. Patent 4,005,228 is utilized to separate butter fat into fractions by melting point, i.e., melting point less than 0° C, between 0° and 20° C, and above 20° C. The high- and low-melting fractions are combined to yield a dairy spread.

Supercritical extraction has also been utilized to modify various foodstuffs, including butter, as described in U.S. Patent 4,504,503. However, one of the drawbacks to this technique is that conditions which maintain the solvent in the supercritical region typically involve extremes of temperature and pressure. Therefore, the equipment required is expensive. For example, in this patent, the preferred temperature range is from 40° to 250° C, while the preferred pressure range is from 100 to 400 bar.

British patent specification 1,559,064 discloses the use of molecular distillation to reduce the cholesterol content of a medium containing fats. After degassing, anhydrous fat is subjected to molecular distillation at pressure less than 0.005 Torr to remove the unsaponificable fraction, which contains the sterols. An aqueous medium having a viscosity of from 2000 to 20,000 cp measured at a temperature between 20 and

2

30°C is mixed into the treated fat at a temperature between 15 and 45°C. The mixing forms a water-in-oil emulsion which represents product of the butter or margarine type.

Both U.S. Patent 2,613,215 and EP 0 174 848 A2 teach that cholesterol can be removed from fats by contacting the fat with a solid absorbent or adsorbent material. Silica gel and activated carbon are utilized as examples of appropriate material.

Shishikura, "Modifications of Butter Oil by Extraction with Supercritical Carbon Dioxide", 50 Agric. Biol. Chem. 1209 (1986), notes that supercritical fluid extraction using carbon dioxide is useful for fractionation of triglycerides in butter oil according to carbon number, but that this technique does not separate cholesterol from the triglycerides. Instead, butter oil was contacted with supercritical carbon dioxide in a silicic acid column. However, this supercritical chromatographic technique not only lowered the cholesterol level, but also affected the triglyceride distribution. Thus, the technique is unsatisfactory, because the composition and spreadability are affected.

It is an object of this invention to provide a method for production of low-cholesterol animal fat by a short path distillation process.

It is a further object of invention to provide a method for producing low-cholesterol animal fat by a short path distillation process in combination with the use of entrainment enhancing compositions.

It is yet another object of this invention to provide a method for production of low-cholesterol animal fat by a short path distillation process in combination with use of entrainment enhancing compositions which are components of the animal fat.

It is another object of this invention to provide the low-cholesterol products of these methods.

## SUMMARY OF THE INVENTION

In accordance with these and other objects, this invention relates to a method for production of low-cholesterol animal fats. Anhydrous liquid animal fat is subjected to a short path distillation process wherein entrainment-enhancing compositions are used to provide a low-cholesterol animal fat product having composition and organoleptic characteristics substantially similar to those of the natural animal fat. In particular, the invention relates to a method of producing low-cholesterol butter fat.

## DETAILED DESCRIPTION OF THE INVENTION

This invention is based on the discovery that cholesterol can be removed from animal fat without exposing the fat to high temperature for extended periods and without utilizing solvents. A short path distillation process is employed wherein entrainment enhancing compositions are used to provide a low-cholesterol animal fat which has composition and organoleptic characteristics essentially similar to those of natural animal fat and which retains essentially all of the color pigments originally present. Thus, the color of a low-cholesterol butter fat product is essentially identical to that of the untreated butter. It has also been discovered that the entrainment enhancing compositions may be prepared by partially hydrolyzing a portion of the animal fat being treated.

In the practice of this invention, typically, at least about 50 percent of the cholesterol is extracted. It is preferred to remove at left about 60 percent, more preferably at least about 70 percent, of the cholesterol originally present. However, any removal level can be selected by those who practice the invention. Cholesterol reduction in excess of 90 percent has been achieved by the practice of this invention.

Any anhydrous animal fat which contains cholesterol can be suitably processed by the method of this invention. For convenience, the invention will be described with reference to butter fat. However, the scope of the invention is not limited to butter fat.

Anhydrous butter fat may be obtained from butter by any known method. Butter typically is obtained by churning milk to rupture the milk fat globule membranes and obtain an emulsion of fat and aqueous components. Butter can be dehydrated by heating to about 70°C (158°F) and centrifuging. Other methods of dehydration known to those skilled in the art are acceptable.

Anhydrous butter fat typically will contain less than about 0.5 percent, preferably less than about 0.2 percent, and more preferably less than about 0.1 volume percent aqueous components.

In accordance with the method of the invention, cholesterol is removed from anhydrous butter fat under short path distillation conditions. Those skilled in the art recognize that short path distillation encompasses distillation operated under high vacuum in apparatus wherein the vapor path is unobstructed. As defined herein, short path distillation conditions encompass conditions suitable for molecular distillation, i.e., high vacuum in apparatus wherein the condenser is separated from the evaporator by a distance less than the mean free path of the evaporating molecules. Additional details may be found in Perry's Chemical Engineering Handbook, Fourth Edition, pages 17-29 to 17-33.

Any short path distillation equipment conveniently is used in the method of the invention. Known equipment includes falling film and wiped falling film stills, commercially available short-path distillation apparatus, and centrifugal rotating disk evaporators. Suitable stills are described in the above-referenced Perry's Chemical Engineering Handbook.

In the method of the invention, short path distillation equipment is utilized, as described herein, to separate cholesterol from the remainder of the fat. Cholesterol is vaporized while the remainder of the fat is essentially unvaporized. Thus, a cholesterol-rich fraction is separately recovered by condensing molecules which have been vaporized and recovering condensate separately from the remainder, i.e., the unvaporized portion, which remains in the evaporator.

Short-path distillation equipment is especially suitable for use in the method of the invention. An example of short-path distillation equipment is the "KD" series of short-path distillation apparatus sold by Leybold-Heraeus GmbH. The conditions under which short-path distillation is achieved are especially suited for use in this invention. The temperature to which the fat is exposed is relatively low and the duration of the exposure is relatively short. Further, such distillation is carried out under very low pressure. Typically, the pressure is between about 0.001 and 0.1 Torr, preferably between about 0.005 and 0.05 Torr, and more preferably between about 0.01 and 0.03 Torr. Thus, the operating conditions allow separation to proceed while minimizing exposure of product to deleterious conditions.

It has been discovered that the presence of hydrolyzed fractions of fat enhances the cholesterol-removal efficiency of the distillation. These hydrolyzed components act as entrainment aids, i.e., they aid the liberation of cholesterol from the desirable fat fraction during the fractional distillation. Typically, entrainment aids are materials which boil at a temperature below the boiling temperature of the material being removed and which interact in some way with that material. Thus, the material to be removed may form a complex with the entrainment aid, may be soluble in the entrainment aid, or may interact in other ways with the entrainment aid.

The relationship between the material being removed and the entrainment aid affords the opportunity to separate the material from the other components at conditions more favorable than those required without use of aid, or to obtain a better separation, reflected in reduced loss of desired product, increased removal of the material, or in other ways.

The hydrolyzed fractions of fat which are useful in this capacity are mono- and di-glycerides. The source of these components is not critical to the practice of the invention. Thus, the components can be added to the fat prior to distillation, or can be generated in situ by partial hydrolysis prior to distillation. Conditions under which such partial hydrolysis can be undertaken are known to those skilled in the art.

Hydrolyzed fats can be prepared by hydrolysis of less expensive fractions of fats from a source different from the fat being treated herein. If a fat source other than the fat being treated is utilized to obtain these hydrolyzed components, care should be taken to ensure that no foreign or objectionable odors or flavors are added by these components. Use of the hydrolyzed portion of the fat being treated eliminates the possibility of introducing objectionable odors or flavors.

The quantity of monoglyceride or diglyceride entrainment aids, or of hydrolyzed fat fraction containing at least one of these aids, utilized in the method of the invention is limited, inter alia, by considerations such as cost, effect of entrainment aid on organoleptic characteristics, identity of the entrainment aid, and concentration of entrainment aid in the hydrolyzed fat fraction utilized. Up to about 20 wt. percent, preferably between about 1 and 15 wt. percent, and more preferably between about 2 and 10 wt. percent, of entrainment aid is added to the fat being treated.

Monoglycerides are preferred entrainment aids. Both saturated and unsaturated monoglycerides having between about 12 and 20 carbon atoms are preferred when the animal fat being treated is butter fat. Monostearin, an 18-carbon saturated fatty acid monoglyceride, is an especially preferred entrainment aid for treatment of butter fat.

A portion of the fat being treated can be separately hydrolyzed to produce a component containing monoglycerides, diglycerides, or a mixture thereof. This component then is re-introduced to the fat being treated to provide an effective quantity of entrainment aids.

The hydrolyzed fat component is prepared by introducing a quantity of lipase sufficient to produce the desired concentration of glyceride entrainment aid in the component. Those skilled in the art will be able to determine the quantity of lipase required in accordance with the guidance provided herein. Skilled practitioners also recognize that pancreatic lipase is preferred to calf gullet lipase because the former yields primarily monoglycerides while the latter yields primarily diglycerides. As noted above, monoglycerides are preferred entrainment aids. Although it is preferred to hydrolyze a portion of the fat being treated in accordance with method of the invention, any fat source may be used. Similarly, any lipase source may be used. For example, fungal, microbial, and animal (e.g., calf gullet) lipases are satisfactory. Of course, care must be taken to avoid contamination by organoleptically foreign characteristics.

The hydrolyzed fat component can be further treated, e.g. deodorized, before it is mixed with the fat to be treated in accordance with the method of this invention. Deodorization is a treatment known to skilled practitioners. A small quantity of steam is sparged through the component or the component is subjected to molecular distillation at a temperature of about 150°C to remove relatively volatile compounds, i.e., those compounds which may impart an unacceptable quality to the product.

As described above, the quantity of entrainment aid added typically is up to about 20 wt. percent, preferably between about 1 and 15 wt. percent, and more preferably between about 2 and 10 wt. percent, of the fat being treated. Entrainment aid will be present in hydrolyzed fat component in various concentrations. The quantity of hydrolyzed fat component utilized will, therefore, depend not only on the desired quantity of entrainment aid but also on the concentration of entrainment aid in hydrolyzed fat component.

The concentration of entrainment aids, i.e., mono- and diglycerides, in the hydrolyzed fat component can be determined by any known method. For example, any of the methods described in the following documents may be used:

. AOAC Method 28.133, "Official Methods of Analysis," 13th Ed., Association of Official Analytical Chemists (1980);

. Quinlin, 35 J. Am. Oil Chemists' Society 325 (1958);

. Ravin, 34 J. Am. Oil Chemists' Society 261 (1957); and

. Riisom, 55 J. Am. Oil Chemists' Society 649 (1978).

Animal fat is treated in accordance with the method of the invention by mixing fat and entrainment aid, fractionally distilling the mixture under short path distillation conditions and separately recovering a cholesterol-rich fraction and a cholesterol-depleted fraction. The cholesterol-depleted fraction is the desired product. The cholesterol-rich fraction can be discarded, or can be further processed to recover cholesterol or the monoglyceride fraction.

In the distillation process, the number of stages and the temperature differences between the stages is a matter of economic choice. Preferably, between about 1-3 stages, more preferably between about 1-2 stages, and temperatures between about 170 and 230°C, are utilized. At a temperature less than about 170°C, cholesterol removal is minimal, while a temperature greater than about 230°C results in excessively high fat losses.

Where a plurailty of stages is used, the temperature in a later stage can be either higher or lower than the temperature in an earlier stage. However, it is preferred to keep the temperature of the butter oil low for as long as possible to minimize the deleterious effects on the butter fat. Thus, for example, a suitable profile within the method of this invention is 170°C in a first stage, 190°C in a second stage, and 210°C in a third stage. Examples of suitable two-stage temperature profiles include 190°C in the first stage and 210° in the second, 185°C in both stages, and 200°C in the first stage and 180°C thereafter.

The degree of cholesterol removal is a matter of economic choice. Typically, at least about 50 percent of the cholesterol is removed. Preferably, cholesterol removal exceeds about 60 percent, more preferably exceeds about 70 percent, and most preferably exceeds about 80 percent.

Adjuvants may be added to the product. Typical additives include colorants, anti-oxidants such as TBHQ and BHA, stabilizing agents such as citric acid, salt, and vitamins. Known adjuvants are incorporated in manners known to those skilled in the art.

The following examples illustrate various aspects of this invention, but are in no way intended to limit the scope of the invention. The scope of the invention is limited only by the appended claims.

## EXAMPLE 1

A mixture consisting of 3 parts by weight anhydrous butter oil and 1 part by weight lipolyzed (calf pregastric lipase) butter oil having an acid number of 25 were treated in accordance with the method of the invention on a Model KDL-1 single stage short-path distillation apparatus (0.018 m$^2$ active evaporator area) manufactured by Leybold-Heraeus GmbH. Between about 1 and 2 grams of mixture were fractionally distilled per minute in a one stage molecular distillation process. The pressure was maintained at 0.1 Torr, and The temperature was maintained in the range described in Table 1 below. The condenser temperature was maintained at 65°C.

## TABLE 1

### Cholesterol Reduction By Short-Path Distillation

| Test | Temperature °C | Percent Cholesterol Reduction |
|---|---|---|
| Feed-Anhydrous butter oil without entrainment aid (Prior Art) | | |
| A | 180-185 | 20 |
| B | 200-205 | 34 |
| C | 230-235 | 64 |
| Feed-Anhydrous butter oil (3 parts) and deodorized, lipolyzed butter oil (1 part) (Invention) | | |
| D | 185 | 79 |
| E | 210 | 89 |

This example indicates clearly the superiority of the method of the invention in producing significant cholesterol reduction.

## EXAMPLES 2 AND 3

In Examples 2 and 3, various butter oil-containing streams were separately treated in a KD-6 single stage short-path distillation apparatus (0.06 m² active evaporator area) manufactured by Leybold-Heraeus GmbH. The feed rate was about 1100 ml/hr and the pressure was maintained at about 0.003 Torr.

In each example, the following streams were treated in accordance with the method of the invention.

| STREAM | IDENTIFICATION |
|---|---|
| L | Anhydrous butter oil without entrainment aid |
| M | Anhydrous butter oil plus 4 wt. percent (based on weight of butter oil) monostearin as entrainment aid |
| N | Three parts anhydrous butter oil plus 1 part deodorized, lipolyzed butter oil (acid number of 25) as entrainment aid |

## EXAMPLE 2

The above-described streams were treated in single-step distillation to reduce the cholesterol concentration in accordance with the method of the invention. The temperature at which each stream was treated is shown in Table 2 below.

## TABLE 2

| Feed | Temperature °C | Percent Cholesterol Reduction |
|------|----------------|-------------------------------|
| L | 210 | 33 |
| L | 220 | 46 |
| M | 204 | 79 |
| N | 210 | 53 |
| N | 220 | 72 |

This example clearly indicates the superiority of the method of the invention for cholesterol removal.

**EXAMPLE 3**

Feedstreams L and M, described above, were created in accordance with the method of the invention by twice passing the streams through the single stage short path distillation apparatus described in Example 1. The temperatures at which each stream was treated are shown in Table 3 below:

## TABLE 3

| Feed Stream | Temperatures, °C — | | Percent Cholesterol Reduction |
|-------------|-------------|--------------|-------------------------------|
| | First Stage | Second Stage | |
| L | 190 | 190 | 58 |
| L | 190 | 200 | 79 |
| L | 190 | 210 | 86 |
| M | 204 | 190 | 89 |
| M | 204 | 200 | 93 |
| M | 204 | 210 | 95 |

This example clearly illustrates the superiority of the method of the invention for cholesterol removal.

Although preferred embodiments of this invention have been discussed herein, those skilled in the art will appreciate that changes and modifications may be made without departing from the spirit of the invention, as defined in and limited only by the scope of the appended claims.

**Claims**

1. A process for producing low cholesterol animal fat comprising:
   (a) providing a mixture comprising anhydrous animal fat and an entrainment aid, said entrainment aid selected from the group consisting of monoglycerides, diglycerides, and mixtures thereof;
   (b) fractionally distilling said mixture under short path distillation conditions to produce a cholesterol-rich fraction and a cholesterol-depleted fraction; and
   (c) separately recovering the cholesterol-depleted fraction.

2. The method of claim 1 wherein the animal fat is butter fat.

7

3. The method of claim 1 or 2 wherein the quantity of entrainment aid is up to about 20 weight percent based on the weight of the anhydrous animal fat.

4. The method of claim 3 wherein the quantity of entrainment aid is between about 1 and 15 weight percent.

5. The method of claim 4 wherein the quantity of entrainment aid is between about 2 and 10 weight percent.

6. The method of any preceding claim wherein the entrainment aid is produced by partially hydrolysing an organoleptically unobjectionable fat.

7. The method of claim 6 wherein a major portion of the entrainment aid is monoglycerides having between about 12 and 20 carbon atoms.

8. The method of claim 7 wherein a major portion of the entrainment aid is monostearin.

9. The method of any preceding claim wherein the molecular distillation pressure is between about 0.001 and 0.1 Torr.

10. The method of claim 9 wherein the pressure is between about 0.005 and 0.05 Torr.

11. The method of claim 10 wherein the pressure is between about 0.01 and 0.03 Torr.

12. A cholesterol-depleted animal fat produced by the method of any preceding claim.

13. A cholesterol-depleted butter fat produced by the method of any one of claims 2 to 11.

14. A cholesterol-depleted butter fat produced by the method of claim 16.

European Patent Office

**PARTIAL EUROPEAN SEARCH REPORT**
which under Rule 45 of the European Patent Convention shall be considered, for the purposes of subsequent proceedings, as the European search report

Application number

EP 90 30 1647

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 554 107 (MASAYASU TAKAO)<br><br>* Claims 1,9; column 3, lines 33-50 * | 1,3-7, 9-12 | C 11 B 3/12<br>A 23 C 15/14 |
| D,Y | GB-A-1 559 064 (SOCIETE DES PRODUITS NESTLE)<br><br>* Claims 1-6; examples 1-5 * | 1,2, 12,13 | |
| A | -- | 9 | |
| A | JOURNAL OF THE AMERICAN OIL CHEMISTS' SOCIETY, vol. 65, no. 10, October 1988, pages 1642-1646, Champaign, US; J. ARUL et al.: "Fractionation of anhydrous milk fat by short-path distillation"<br><br>./. | | TECHNICAL FIELDS SEARCHED (Int. Cl.4)<br><br>C 11 B<br>A 23 C |

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-13
Claims searched incompletely:
Claims not searched: 14
Reason for the limitation of the search:

Inconsistency claim 14 refers to a method of claim 16, which is a non-existent claim.

| Place of search | Date of completion of the search | Examiner |
|---|---|---|
| THE HAGUE | 18-09-1990 | DEKEIREL |

EPO Form 1505.1 03.82

## DOCUMENTS CONSIDERED TO BE RELEVANT

| Category | Citation of document with indication, where appropriate, of relevant passages | Relevant to claim |
|---|---|---|
| | * Page 1642, table 1; page 1643, left-hand column, paragraph 3; page 1646, left-hand column, last paragraph * | 1,2, 12,13 |
| A | | 3 |
| | -- | |
| A | GB-A- 501 194 (E.W. FAWCETT et al.) | |
| | * Page 3, lines 54-58; page 4, lines 52-60; page 4, line 126 - page 5, line 4 * | 1,2, 12,13 |
| | -- | |
| A | GB-A-2 031 290 (TAIYO OIL & FAT Mfg CO.) | |
| | * Claims 1,2,16; page 3, lines 19-20; example 5 * | 1,12 |
| | -- | |
| A | EP-A-0 350 379 (INSTITUT NATIONAL DE LA SANTE ET DE LA RECHERCHE MEDICALE (INSERM)(E.P.S.T.) | |
| | * Claims 1,4,5,8; column 1, lines 53-59; column 2, lines 32-53 * | 1,2 12,13 |
| | ---- | |

CLASSIFICATION OF THE APPLICATION (Int. Cl.4)

TECHNICAL FIELDS SEARCHED (Int Cl 4)